# EUROPÄISCHE PATENTANMELDUNG

(11) **EP 2 392 899 A2**
(43) Veröffentlichungstag der Anmeldung: **07.12.2011**
(21) Anmeldenummer: 11168333.0
(22) Anmeldetag: 01.06.2011
(51) Int. Cl.: G01D 5/245

(54) **Zahnraddrehgeber**

(30) Priorität: 02.06.2010 DE 102010029640
(71) Anmelder: VS Sensorik GmbH, 33689 Bielefeld (DE)
(72) Erfinder: Nimmrichter, Armin, 85276 Hettenshausen (DE)
(74) Vertreter: Grünecker, Kinkeldey, Stockmair & Schwanhäusser

(57) **Zusammenfassung**

Die Erfindung betrifft einen Drehgeber (30), eine Drehgeberzahnvorrichtung (20) für den Drehgeber (30) und eine Sensorvorrichtung für den Drehgeber (30). Insbesondere umfasst die Drehgeberzahnvorrichtung (20) eine Vielzahl von Messzähnen (10) und mindestens eine Referenzmarke (7, 9, 111), wobei die Vielzahl von Messzähnen (10) jeweils eine Länge B, eine Breite D und eine Höhe H aufweisen, und wobei die Vielzahl von Messzähnen (10) auf einem Basiselement (200) mit einem Mittenabstand P > D angeordnet sind, so dass die Längsachsen (Z) der Vielzahl von Messzähnen (10) parallel zueinander liegen. Eine Breite der Basis ist gleich der Länge B der Messzähne (10) und die Referenzmarke (7, 9, 111) ist in mindestens einem Bereich mindestens eines Markierzahns (6) und/oder einer Messzahnlücke zwischen zwei benachbarten Messzähnen (6-1, 6-2) ausgebildet.

## Beschreibung

### Gebiet der Erfindung

Die vorliegende Erfindung betrifft einen Zahnraddrehgeber und insbesondere eine Drehgeberzahnvorrichtung für einen Drehgeber gemäß dem einleitenden Teil des Anspruches 1. Die vorliegende Erfindung betrifft weiterhin eine Sensorvorrichtung für einen Drehgeber und einen Drehgeber.

### Stand der Technik

Zum Erfassen der Drehzahl und zum Messen des Drehwinkels von rotierenden Achsen, z. B. in Antriebsspindeln von Werkzeugmaschinen, werden häufig magnetische Zahnraddrehgeber verwendet. Bei diesen Drehgebern wird ein Zahnrad berührungslos durch einen magnetischen Sensor abgetastet. Anstelle des magnetischen Sensors kann auch ein Sensor, welcher nach einem induktiven Prinzip arbeitet verwendet werden. Wird anstelle des Zahnrades eine Zahnstange verwendet, dann ergibt dies einen Lineargeber. Am Ausgang der Dreh- bzw. Lineargeber erhält man analoge SIN/COS-Signale und ein Referenzmarkensignal. Alternativ können diese Signale in digitaler Form bereitgestellt werden.

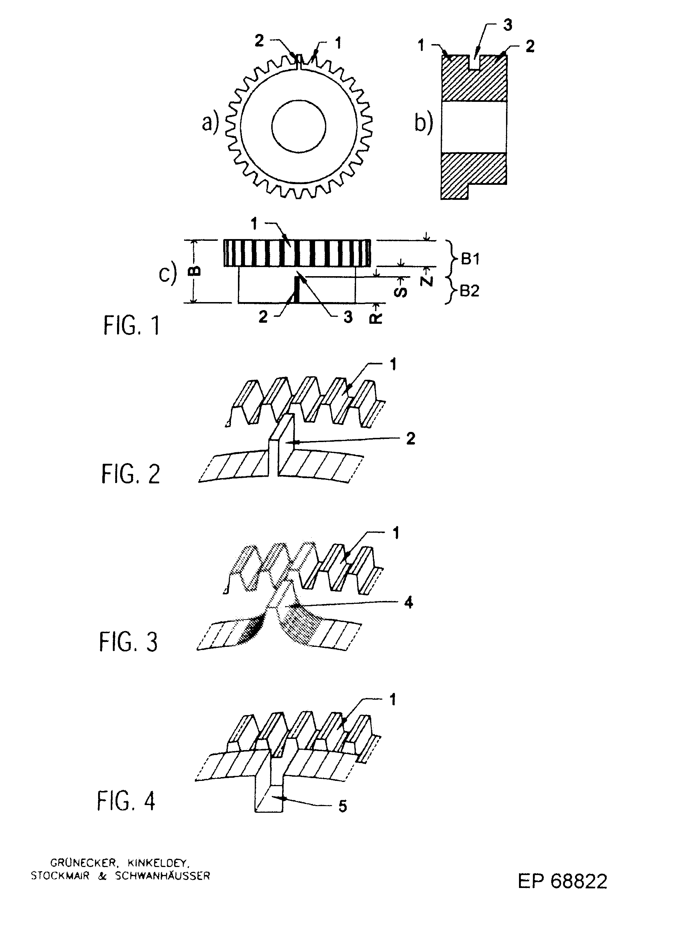

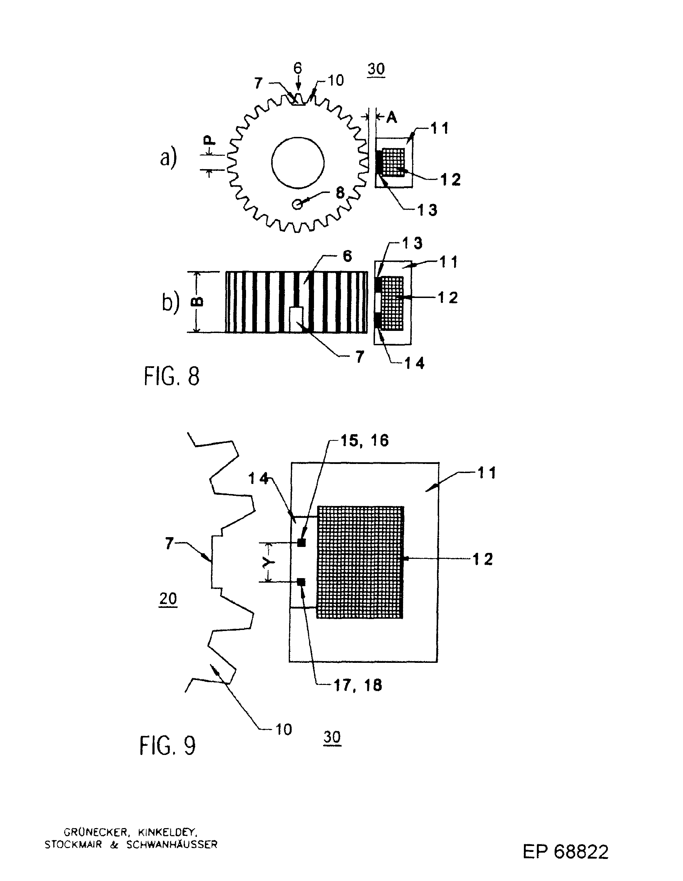

Eine wesentliche Komponente dieser Geber ist das Zahnrad (für Lineargeber entsprechend die Zahnstange). Abb. 1 zeigt den Aufbau eines typischen Messzahnrades. Das Zahnrad hat eine Verzahnung 1 und eine Referenzmarke 2. Durch die Referenzmarke 2 wird die signalgebende Fläche des Messzahnrads in eine Drehsignalspur B1 und eine Markierspur B2 aufgeteilt. Die Breite Z der Verzahnung, die die Drehsignalspur B1 bildet, und die Breite R der Referenzmarke, die die Markierspur B2 bildet, sind derart ausgelegt, dass durch den Sensor (in Abb. 8 und 9 mit dem Bezugszeichen 11 gezeigt) immer optimale Signale generiert werden. Hierbei ist z.B. die thermische Ausdehnung der Achse, auf welcher sich das Zahnrad befindet, zu berücksichtigen. Zum Beispiel muss vermieden werden, dass bei thermischer Ausdehnung der Achse, die Drehsignalspur B1 und die Markierspur B2 aus dem Erfassungsbereich der entsprechend zugeordneten Sensoren wandert. Ferner sollte die Gesamtbreite des Zahnrades B derart ausgelegt sein, dass ein stabiler Sitz des Zahnrades auf der Achse gewährleistet ist. Aus konstruktiven Gründen und um ein mögliches Übersprechen der Spuren zu reduzieren, ist die Referenzmarkenspur 2 durch einen Abstand 3 von der Verzahnung getrennt. Typische Werte für R und Z sind 4 - 5 mm. Die Gesamtdicke des Zahnrades B ist typischerweise 10 - 12 mm.

Wesentliches Unterscheidungsmerkmal der Zahnräder verschiedener Hersteller ist die Ausführung der Referenzmarke. Typische Ausführungsformen sind "Fähnchen" 2 (Fig. 1 und 2), "Zahn" 4 (Fig. 3) oder "Schlitz" 5 (Fig. 4). In den Fig. 1 bis 4 sind diese Ausführungsformen der Referenzmarke derart dargestellt, dass die jeweiligen Referenzmarken bzgl. der Verzahnung 1 in Flucht mit einem der Zähne sich befinden. Es gibt Zahnräder, bei denen die Referenzmarke in Flucht mit einer Zahnlücke oder einer Zahnflanke der Verzahnung 1 angeordnet ist.

Das Anbringen der Referenzmarke am Zahnrad ist vergleichsweise kostenintensiv. Darüber hinaus kann das Anbringen der Referenzmarke zu einem Rundlauffehler, beispielsweise einem Höhenschlag, des Zahnrades führen, was letztendlich die Qualität der Ausgangssignale verschlechtert.

Es ist deshalb eine Aufgabe der vorliegenden Erfindung, eine Drehgeberzahnvorrichtung für einen Drehgeber mit einer Referenzmarke bereitzustellen, die kostengünstig zu realisieren ist, und die weniger Signalfehler erzeugt. Weiterhin ist es eine Aufgabe der vorliegenden Erfindung, eine dazu passende Sensorvorrichtung sowie ein Gesamtsystem aus Drehgeberzahnvorrichtung mit Sensorvorrichtung bereitzustellen.

### Zusammenfassung der Erfindung

Diese Aufgabe wird erfüllt durch eine Drehgeberzahnvorrichtung gemäß des Anspruches 1, durch eine Sensorvorrichtung gemäß dem Anspruch 15 und durch einen Drehgeber gemäß des Anspruches 22.

Insbesondere stellt die vorliegende Erfindung eine Drehgeberzahnvorrichtung für einen Drehgeber bereit, die eine Vielzahl von Messzähnen und eine Referenzmarke aufweist. Die Vielzahl von Messzähnen weisen jeweils eine Länge B, eine Breite D und eine Höhe H auf. Die Messzähne sind auf einem Basiselement mit einem Mittenabstand P größer D angeordnet, so dass die Längsachsen der Vielzahl von Messzähnen parallel zueinander liegen. Die Referenzmarke ist in mindestens einem Bereich mindestes eines Markierzahnes und/oder einer Messzahnlücke zwischen zwei benachbarten Messzähnen ausgebildet.

Durch diese Art von Drehgeberzahnvorrichtung vereinfacht sich die Herstellung der gesamten Zahnvorrichtung einschließlich der Referenzmarke, da z. B. ein Standardzahnrad für einen Rotationsdrehgeber oder eine Zahnstange für einen Lineardrehgeber verwendet werden kann, bei denen nur einzelne Zähne oder Zahnlücken modifiziert werden. Die Referenzmarke muss nicht, wie im Stand der Technik üblich, als zusätzliches Element an ein Zahnrad angefügt werden. In jedem Falle ist die Geometrie der Drehgeberzahnvorrichtung einfach und leicht zu fertigen. Dadurch sinken die Herstellungskosten.

Wird die Drehgeberzahnvorrichtung so ausgelegt, dass die Breite der Basis ist gleich der Länge B der Messzähne ist, ist die Herstellung besonders einfach.

Je nach verwendeten Sensorelementen ist die Drehgeberzahnvorrichtung aus einem geeigneten Material gefertigt. Bei Verwendung von Magnetfeldsensoren, wie sie für solche Drehgebervorrichtungen häufig verwendet werden, kann ein ferromagnetisches Material verwendet werden. Werden induktive Messprinzipien verwendet, reicht ein leitfähiges Material aus.

Die Referenzmarke kann leicht durch Modifikation von Form und/oder Material mindestens eines Messzahnes, der als Markierzahn dient, erreicht werden. Durch die Modifikation eines Messzahns, bei der ein Teil des Messzahns erhalten bleibt, wird die Zahnfläche der Drehgeberzahnvorrichtung in eine Drehsignalspur und eine Markierspur aufgeteilt, die von einem oder mehreren Sensoren abgetastet werden können. Dadurch sind nur geringfügige Änderungen an einem Standartzahnrad oder eine Standartzahnstange nötig.

Z. B. kann in einer Ausführungsform ein Teil des Markierzahnes in Längsrichtung in einer Länge X < B entfernt werden, wodurch eine Lücke entsteht. Die Länge X ist derart zu wählen, dass stabile Sensorsignale auch bei einer thermischen Ausdehnung der Achse, auf welchem sich das Zahnrad befindet, generiert werden. In gängigen Drehgeberzahnvorrichtungen beträgt die Länge X mindestens ca. 4 bis 5 mm bei einer Gesamtbereite des Zahnrades B von 10 bis 12 mm. In allgemeiner Form erfüllt das Verhältnis zwischen der Länge X der Markierung und der gesamtbreite B der Drehgeberzahnvorrichtung die Relation :
0,3 ≤ X/B ≤ 0,5.

Dadurch können Sensoren so positioniert werden, dass nur geringes Übersprechen zwischen den Sensoren auftritt und die Sensoren bei thermischer Ausdehnung der Achse über der Markierspur bzw. der Drehsignalspur bleiben.

Die Lücke kann in einer weiteren Ausführungsform z. B. durch Ausfräsen bis zu einer Tiefe T ≥ H hergesellt werden. Die Breite L einer solchen Freifräsung sollte ca. das 1 bis 1,5 fache des Mittenabstandes P von zwei Messzähnen sein. So können auch Standartzahnräder oder Standartzahnstange verwendet und auf einfache Weise modifiziert werden.

Alternativ zum teilweisen Entfernen eines Messzahns (Markierzahn) kann in einer weiteren Ausführungsform auch ein Bereich mindestens einer Messzahnlücke zwischen zwei benachbarten Messzähnen in eine Länge X kleiner B ausgefüllt werden. Wie in der vorherigen Ausführungsform sollte die Länge X derart gewählt werden, dass stabile Sensorsignale auch bei einer thermischen Ausdehnung der Achse, auf welchem sich das Zahnrad befindet, generiert werden. Vorzugsweise wird die Messzahnlücke über die Länge X mit einem ähnlichen Material wie die Verzahnung, z. B. mit einem ferromagnetischen Stahl, aufgefüllt. Das Auffüllen kann durch Einkleben eines passenden Metallteilchens oder mittels Schweißen geschehen. Dies kann beispielsweise bei großen Wellen mit großen Zahnrädern von Vorteil sein, wo große Materialmengen abgetragen werden müssten, wenn der Zahn teilweise abgefräst werden würde.

In alternativen Ausführungsformen wird die Breite D eines Teils des Markierzahns in Längsrichtung in einer Länge X kleiner B verbreitert oder verschmälert. Eine Verschmälerung kann z. B. durch Abfräsen erfolgen. Eine Verbreiterung kann z. B. durch Auftragschweißen oder Aufkleben eines ferromagnetischen Materials erfolgen. Bei Verbreiterung und/oder Verschmälerung von mehreren Markierungszähnen kann auch eine Codierung in die Drehgeberzahnvorrichtung eingeprägt werden. Durch die Codierung kann ein störungssicheres Referenzmarkensignal generiert werden. Weiterhin kann z. B. eine Seriennummer für jede Drehgeberzahnvorrichtung oder eine Herstellungsserie von Drehgeberzahnvorrichtungen in die Drehgeberzahnvorrichtung eingeprägt werden, um so z. B. Herstellungsfehler zurückverfolgt werden.

In einer weiteren alternativen Ausführungsform ist die Drehgeberzahnvorrichtung ein Zahnrad und das Zahnrad ist in einer Breite X < B bis zu einer Tiefe T ≥ H tangential abgeschnitten (z. B. abgefräst), wobei ein Messzahn in der Mitte des tangential ausgeschnittenen Bereichs unberührt bleibt, wodurch Zahnrümpfe und ein Messzahn in deren Mitte die Referenzmarke bilden.

Diese Art von Referenzmarke hat den Vorteil, dass die Fertigung besonders einfach ist, da das Abfräsen eines größeren Bereichs des Zahnrads eine geringe Präzision erfordert, wodurch Herstellungskosten weiter verringert werden.

In einer weiteren Ausführungsform weist das Zahnrad mindestens eine Ausnehmung zur Kompensation von Unwucht auf. Je nach Modifikation von Messzähnen verlagert sich der Schwerpunkt des Zahnrads, so dass durch eine Ausnehmung der Schwerpunkt wieder auf die Rotationsachse zurückverlagert werden kann.

Alternativ dazu ist es auch möglich, diagonal gegenüberliegende Messzähne in gleicher Weise zu modifizieren, so dass die Lage des Schwerpunkts erhalten bleibt.

Gemäß eines zweiten Aspektes der vorliegenden Erfindung wird eine Sensorvorrichtung für einen Drehgeber bereitgestellt, vorzugsweise zur Verwendung mit den vorher genannten Drehgeberzahnvorrichtungen. Die Sensorvorrichtung umfasst eine erste Sensoranordnung, die so ausgelegt ist, dass sie ein SIN/COS-Spursignal in Reaktion auf eine Bewegung von Messzähnen einer Drehgeberzahnvorrichtung erzeugen kann. Weiterhin umfasst die Sensorvorrichtung eine zweite Sensoranordnung, die so ausgelegt ist, dass sie ein Referenzmarkensignal in Reaktion auf eine Bewegung einer Referenzmarke der Drehgeberzahnvorrichtung erzeugen kann. Weiterhin umfasst die Sensorvorrichtung ein Bias-Magnetsystem und eine Steuer- und Auswerteelektronik.

In einer Ausführungsform umfasst die zweite Sensoranordnung der Sensorvorrichtung zwei Sensorelemente, die als Halbbrücke geschaltet sind. Durch entsprechende Anordnung der zwei Sensorelemente in Bezug auf eine Drehgeberzahnvorrichtung gemäß der vorliegenden Erfindung werden zwei SIN/COS-Signale generiert, wobei ein Signal das Referenzmarkensignal beinhaltet. Durch die Verschaltung als Halbbrücke werden die beiden Signale analog verrechnet, so dass die SIN/COS-Signale eliminiert werden, und nur das Referenzmarkensignal übrig bleibt. Somit wird das SIN-ähnliche Störsignal, das durch die Messzähne auf beiden Sensorelementen erzeugt wird, gedämpft.

Eine weitere Dämpfung von Störsignalen erreicht man durch Verwendung von vier Sensorelementen in der zweiten Sensoranordnung, die als Vollbrücke verschaltet sind.

In einer Ausführungsform ist diese Sensorvorrichtung so ausgelegt, dass sie sich relativ zu der Drehgeberzahnvorrichtung so positionieren lässt, dass jeweils zwei Sensorelemente auf einer Achse senkrecht zu einer Bewegungsrichtung der Messzähne in einem vorbestimmten Abstand zueinander angeordnet sind, wobei das eine Sensorelement über dem Bereich der Drehgeberzahnvorrichtung mit der Referenzmarke (Markierspur) liegt und das andere Sensorelement über dem Bereich der Drehgeberzahnvorrichtung ohne der Referenzmarke (Drehsignalspur) liegt. Durch diese Anordnung der zwei Sensorelemente in der Sensorvorrichtung lässt sich die Sensorvorrichtung relativ zu der Drehgeberzahnvorrichtung so positionieren, dass zwei Sensorsignale entstehen können, wobei ein Sensorsignal das Referenzmarkensignal enthält, und das andere Sensorelement nicht.

In einer weiteren Ausführungsform ist die Sensorvorrichtung so ausgelegt, dass sich die Sensorvorrichtung relativ zu der Drehgeberzahnvorrichtung so positionieren lässt, dass jeweils zwei Sensorelemente auf einer Achse parallel zur Bewegungsrichtung der Messzähne in einem vorbestimmten Abstand zueinander von 0,5 P < Y < 1,5 P, vorzugsweise Y = P, angeordnet sind, wobei P der Abstand zwischen zwei aufeinanderfolgenden Messzähnen der Drehgeberzahnvorrichtung ist. Durch diese Anordnung von zwei Sensorelementen können zwei phasenverschobene Messsignale erzeugt werden, wobei elektrische und mechanische Störungen, wie beispielsweise elektrische Einstrahlung oder mechanische Erschütterung, beide Sensoren gleichzeitig in gleichem Maße beeinflusst, so dass die Störungen herausgerechnet werden können. Insbesondere in Verbindung mit der Sensoranordnung gemäß der vorhergehenden Ausführungsform und mit einer Verschaltung als Vollbrücke können Störsignale noch effizienter gedämpft werden.

Gemäß einer weiteren Ausführungsform umfasst die erste und die zweite Sensoranordnung jeweils mindestens ein magnetisches Sensorelement, die nach dem magnetoresistiven AMR- oder GMR-Prinzip arbeiten. Mit diesen Sensorprinzipien lassen sich besonders kostengünstige Drehgeberelemente aufbauen.

Gemäß eines dritten Aspektes der vorliegenden Erfindung wird ein Drehgeber bereitgestellt, der eine der vorher beschriebenen Drehgeberzahnvorrichtungen und eine der vorher beschriebenen Sensorvorrichtungen umfasst.

### Kurze Beschreibung der Figuren

Im Folgenden werden anhand der Zeichnungen Ausführungsformen des Erfindungsgegenstandes im Vergleich zum Stand der Technik erläutert. Es zeigen:
Fig. 1 eine Drehgeberzahnvorrichtung mit einer Referenzmarke gemäß dem Stand der Technik;
Fig. 2 eine Ausführungsform einer Referenzmarke gemäß dem Stand der Technik;
Fig. 3 eine andere Ausführungsform einer Referenzmarke gemäß dem Stand der Technik;
Fig. 4 eine weitere Ausführungsform einer Referenzmarke gemäß dem Stand der Technik;
Fig. 5 eine Ausführungsform einer Drehgeberzahnvorrichtung gemäß der vorliegenden Erfindung;
Fig. 6 eine andere Ausführungsform einer Drehgeberzahnvorrichtung gemäß der vorliegenden Erfindung;
Fig. 7 eine weitere Ausführungsform einer Drehgeberzahnvorrichtung gemäß der vorliegenden Erfindung;
Fig. 8 einen Drehgeber einschließlich einer Drehgeberzahnvorrichtung und einer Sensorvorrichtung in verschiedenen Ansichten gemäß der vorliegenden Erfindung; und
Fig. 9 eine Ausschnittsvergrößerung des Drehgebers gemäß der Abbildung 8a.

### Ausführliche Beschreibung von Ausführungsbeispielen

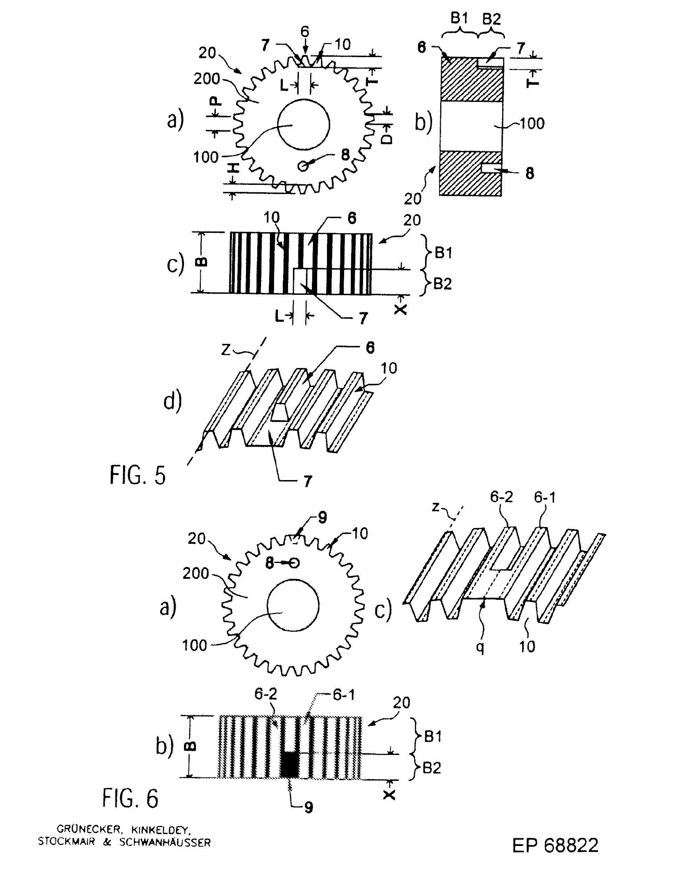

Fig. 5 zeigt verschiedene Ansichten einer Ausführungsform für eine Drehgeberzahnvorrichtung gemäß der vorliegenden Erfindung. Insbesondere zeigt Fig. 5 ein Zahnrad als Drehgeberzahnvorrichtung. Fig. 5a zeigt eine Seitenansicht des Zahnrades, Fig. 5b zeigt eine Schnittansicht des Zahnrades, Fig. 5c zeigt eine Draufsicht auf das Zahnrad und Fig. 5d zeigt eine perspektivische Ansicht eines Teils des Zahnrades mit Details zu den Messzähnen.

Fig. 5a zeigt eine Seitenansicht eines Zahnrades, das als Drehgeberzahnvorrichtung 20 für einen Drehgeber vorgesehen ist. In Fig. 5a bezeichnet das Bezugszeichen 6 einen Markierzahn, das Bezugszeichen 10 einen von vielen Messzähnen, das Bezugszeichen 7 eine Referenzmarke und das Bezugszeichen 8 eine Ausnehmung zur Kompensation einer Unwucht. H bezeichnet die Höhe der Messzähne, D bezeichnet eine Basisbreite eines Messzahnes, P bezeichnet den Mittenabstand von zwei benachbarten Zähnen, L bezeichnet eine Breite einer Freifräsung zum Entfernen eines Teils des Markierzahnes 6 und T bezeichnet die Tiefe der Freifräsung. Das Bezugszeichen 100 bezeichnet ein konzentrisches Loch durch das Zahnrad. Durch das Loch kann das Zahnrad z. B. auf eine Welle (nicht gezeigt) aufgesteckt werden. Dreht sich die Welle, dreht sich das Zahnrad mit und ein Abstand zwischen einem ortsfest angeordneten Abstandssensor und der Zahnradoberfläche ändert sich periodisch entsprechend der Messzahnhöhe H.

Fig. 5b zeigt einen Querschnitt durch das Zahnrad der Fig. 5a. Fig. 5b zeigt deutlich, dass ein Teil 7 des Markierzahns 6 bis zu einer Tiefe T entfernt wurde. Wodurch zwei Zahnradbereiche B1 und B2 entstehen, die eine Drehsignalspur B1 und eine Markierspur B2 repräsentieren. Im Bereich B1 sind die Messzähne 10 gleichmäßig über den gesamten Umfang des Zahnrades verteilt. Im Bereich B2 fehlt ein Zahn. Diese Zahnlücke bildet eine Referenzmarke 7. Weiterhin ist in Fig. 5b die Ausnehmung 8 als Sackloch zu erkennen, die die Unwucht kompensiert, die durch das Entfernen eines Teils des Markierzahnes 6 entstehen würde. Wie aus den Fig. 5a und 5b zu entnehmen sind, erfolgt die Freifräsung 7 bis zu einer Tiefe T, die mindestens gleich der Höhe H des Markierzahnes 6 ist.

Fig. 5c zeigt eine weitere Ansicht des Zahnrades 20 von oben mit senkrechtem Blick auf die Referenzmarke 7. In Fig. 5 ist gezeigt, dass sich die Länge der Messzähne 10 über die gesamte Breite B des Zahnrades 20 erstreckt, während sich der Markierzahn 6 nur über einen Teil der Zahnradbreite B erstreckt. Die Freifräsung 7 erfolgt über eine Länge X und eine Breite L. Die Länge X der Freifräsung ist derart zu wählen, dass stabile Sensorsignale auch bei einer thermischen Ausdehnung der Achse, auf welchem sich das Zahnrad befindet, generiert werden. Das Verhältnis der Länge X zur Gesamtbreite des Zahnrades B sollte folgende Relation erfüllen: 0,3 kleiner X/B kleiner 0,5. Z. B. sollte bei einer Gesamtbreite des Zahnrades B von 10 bis 12 mm die Länge X mindestens ca. 4 bis 5 mm betragen. Die Breite L der Freifräsung 7 sollte ca. 1 bis 1,5 P sein, wobei P der Mittenabstand zwischen zwei aufeinanderfolgende Messzähne 10 ist.

Fig. 5d zeigt eine perspektivische Ansicht eines Teils des Zahnrades 20. Insbesondere ist der Markierzahn 6, die Freifräsung 7 und die angrenzenden Messzähne 10 in perspektivischer Ansicht zu sehen. Wie in der Fig. 5d zu sehen ist, sind die Messzähne 10 parallel zueinander hinsichtlich einer Längsachse Z auf einem Träger 200 angeordnet. Im einfachsten Fall ist der Träger 200 ein zylindrischer Körper mit einem konzentrischen Durchgangsloch 100, bei dem die Messzähne 10 auf der umlaufenden Außenfläche des Zylinders so angeordnet sind, dass die Längsachsen Z der Messzähne 10 parallel zur Rotationssymmetrieachse des Zylinders liegen.

Obwohl das Zahnrad, das durch die oben beschriebene Anordnung gebildet wird, die nahe liegendste Ausführungsform für eine Drehgeberzahnvorrichtung ist, sind auch Modifikationen möglich.

Sind beispielsweise nur weniger Umdrehungen zu messen oder ist in einem anderen Fall nur ein kleiner Winkel einer Drehung bei hoher Auflösung zu messen, kann die Drehbewegung über eine Getriebeeinrichtung auf eine zahnstangenförmige Drehgeberzahnvorrichtung übertragen werden. In diesem Fall sind die Messzähne 10 auf einem stangenförmigen Träger 200 angeordnet. Sollen beispielsweise maximal vier Umdrehungen einer Welle, z. B. einer Lenkwelle gemessen werden, können vier Referenzmarken in die Zahnstange eingefügt werden, um jeweils eine vollständige Umdrehung anzuzeigen. In einem anderen Beispiel könnte sich die Welle nur um wenige Grad um eine Mittellage drehen. In diesem Fall ist nur eine einzige Referenzmarke nötig, um die Mittellage festzulegen.

Fig. 6 zeigt eine alternative Ausführungsform zur Realisierung der Referenzmarke. In der Fig. 6 werden die Merkmale, die identisch zu den Merkmalen der Fig. 5 sind mit denselben Bezugszeichen bezeichnet. Zur Erläuterung dieser Merkmale wird auf Fig. 5 verwiesen. Fig. 6a zeigt eine Seitenansicht des Zahnrades 20 analog zur Fig. 5a, Fig. 6b zeigt eine Aufsicht auf das Zahnrad 20 analog zur Fig. 5c und Fig. 6c eine perspektivische Ansicht eines Teils des Zahnrades 20 von Fig. 6a und b. Wie in Fig. 6a, 6b und 6c zu sehen ist, ist die Referenzmarke 9 in einer Messzahnlücke zwischen zwei benachbarten Messzähnen 6-1 und 6-2 über die Länge X ausgebildet. Die Referenzmarke 9 entsteht durch Auffüllen der Zahnlücke mit dem gleichen oder einem ähnlichen Material wie die Verzahnung 6-1, 6-2 und 10 (z. B. ferromagnetischer Stahl). Dies kann durch Einkleben eines passenden Metallteilchens geschehen oder mittels Schweißen.

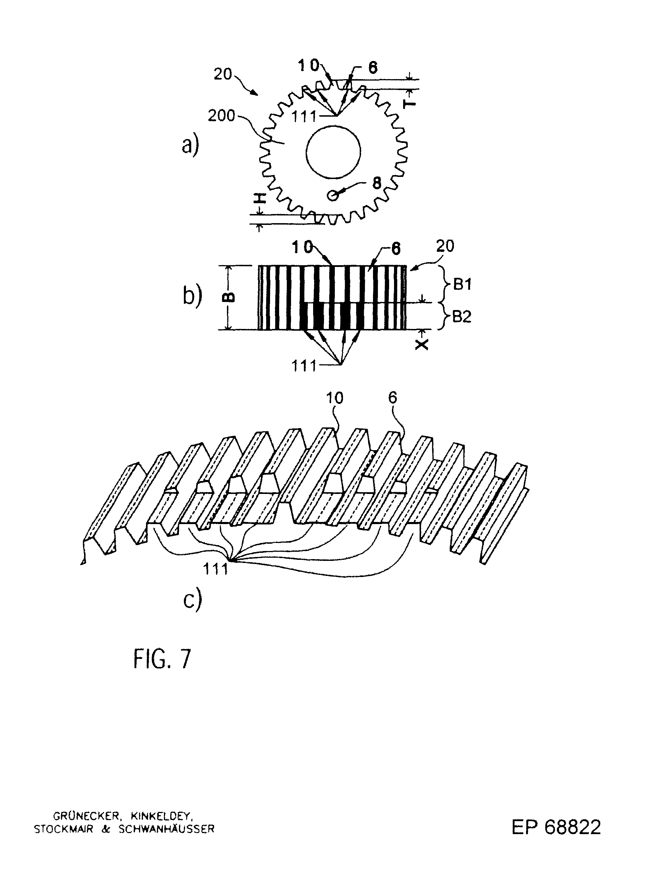

Fig. 7 zeigt eine weitere alternative Ausführungsform zur Realisierung der Referenzmarke 111. Merkmale in der Fig. 7, die identisch zu den Merkmalen in den Fig. 5 und 6 sind, wurden mit den gleichen Bezugszeichen versehen. Zur Erläuterung dieser Merkmale wird auf die Fig. 5 und 6 verwiesen. Fig. 7a zeigt eine Seitenansicht des Zahnrades 20 analog zu den Fig. 5a und 6a, Fig, 7b zeigt eine Aufsicht auf das Zahnrad 20 analog zu den Fig. 5c und 6b, und Fig. 7c eine perspektivische Ansicht eines Teils des Zahnrades 20 von Fig. 7a und b. In der Ausführungsform gemäß Fig. 7 wird rechts und links von einem Messzahn 10 Markierzähne 6 bis zu einer Tiefe T tangential in Bezug auf das Zahnrad 20 mit dem Messzahn 10 als Mittelpunkt der Tangente teilweise entfernt, z. B. durch Fräsen. Übrig bleiben ein durchgehender Messzahn 10 und mehrere Zahnrümpfe 11, die sich über die Breite X der Gesamtbreite B des Zahnrades 20 erstrecken. Die Tiefe T hat mindestens den Betrag der Zahnhöhe H.

Die in Abb. 5, 6 und 7 dargestellten Zahnräder, die z.B. einen ferromagnetischen Stahl enthalten, werden beispielsweise mit einem Magnetfeldsensor berührungslos abgetastet. Die Figuren 8 und 9 zeigen eine Sensorvorrichtung 11, die das Zahnrad 20 im Abstand A berührungslos abtastet. In der Sensorvorrichtung 11 befinden sich mindestens 2 magnetische Sensoranordnungen 13 und 14. Eine erste Sensoranordnung 13 dient zum Erzeugen der SIN/COS-Spursignale und eine zweite Sensoranordnung 14 dient zum Erzeugen des Referenzmarkensignals. Diese Sensoranordnungen 13 und 14 können z.B. nach dem magnetoresistiven AMR- oder GMR-Prinzip arbeiten. Diese magnetoresistiven Sensoranordnungen sind als Widerstandsbrücke oder Halbbrücke aufgebaut. Ferner befindet sich in der Sensorvorrichtung 11 ein Bias-Magnetsystem 12 aus diversen Magneten und Flussleitern, die ein Magnetfeld mit hinreichender Stärke und Orientierung erzeugen können. Zusätzlich befindet sich in der Sensorvorrichtung 11 eine Elektronik, welche die Signale aufbereitet.

Beim Abtasten der Zahnräder gemäß Fig. 5, 6 und 7 durch die zweite Sensoranordnung 14 zum Erzeugen des Referenzmarkensignals (Fig. 8 und 9) wird von den einzelnen Zähnen des Zahnrades ein SIN-ähnliches Störsignal erzeugt. An der Stelle, wo sich die Freifräsung 7 (Fig. 5), die teilweise aufgefüllte Zahnlücke 9 (Fig. 6) oder der teilweise freistehende Zahn 10 (Fig. 7) befindet, hat das Signal eine höhere Amplitude (Nutzsignal).

Zur Dämpfung und im besten Fall Eliminierung des Störsignals gegenüber dem Nutzsignal der zweiten Sensoranordnung 14 umfasst die zweite Sensoranordnung 14 mindestens zwei Sensorelemente. Im Fall von Magnetfeldsensoren können z. B die oben angesprochenen magnetoresistiven Widerstände nach dem AMR- Prinzip (anisotroper magnetoresistiver Effekt) oder dem GMR-Prinzip (gigantischer magnetoresistiver Effekt) verwendet werden. Vorteilhaft können 2 oder 4 einzelne magnetoresistive Widerstände verwendet werden, die entsprechend zueinander positioniert werden müssen.

In einer Ausführungsform umfasst die zweite Sensoranordnung 14 der Sensorvorrichtung 11 zwei Sensorelemente 15 und 16 (bzw. 17 und 18), die als Halbbrücke geschaltet sind. Durch entsprechende Anordnung der zwei Sensorelemente in Bezug auf eine Drehgeberzahnvorrichtung gemäß der vorliegenden Erfindung werden zwei SIN/COS-Signale generiert, wobei ein Signal das Referenzmarkensignal beinhaltet. Insbesondere können in dieser Ausführungsform die zwei Sensorelemente 15 und 16 (bzw. 17 und 18) auf einer Achse Z (siehe Fig. 5 d) senkrecht zu einer Bewegungsrichtung der Messzähne 10 in einem vorbestimmten Abstand zueinander positioniert werden, wobei das eine Sensorelement 15 über der Markierspur liegt und das andere Sensorelement 16 über der Drehsignalspur liegen kann. Durch diese Anordnung der zwei Sensorelemente 15 und 16 in der Sensorvorrichtung 11 können zwei Sensorsignale generiert werden, wobei ein Sensorsignal das Referenzmarkensignal enthält, und das andere Sensorelement nicht.

Durch die Verschaltung der beiden Sensorelemente 15 und 16 als Halbbrücke werden die beiden Signale analog verrechnet, so dass die SIN/COS-Signale eliminiert werden, und nur das Referenzmarkensignal übrig bleibt. Somit wird das SIN-ähnliche Störsignal, das durch die Messzähne 10 auf beiden Sensorelementen 15 und 16 (bzw. 17 und 18) erzeugt wird, gedämpft.

Eine weitere Dämpfung von Störsignalen erreicht man durch Verwendung von vier Sensorelementen 15, 16, 17 und 18 in der zweiten Sensoranordnung 14. Zwei Sensorelemente 15 und 17 werden dabei über der Markierspur B2 angeordnet und die anderen beiden Sensorelemente 16 und 18 werden über der Drehsignalspur B1 angeordnet. Die Sensorelemente 15 und 17 bzw. die Paare (15 und 16) und (17 und 18) werden dabei auf einer Achse parallel zur Bewegungsrichtung der Messzähne in einem vorbestimmten Abstand Y zueinander angeordnet. Der Abstand Y zwischen den Sensorelementen 15 und 17 bzw. den Paaren (15 und 16) und (17 und 18) sollte einen Wert größer 0,5 P und kleiner 1,5 P haben. P ist der Abstand zweier benachbarter Zähne 10 der Verzahnung. Optimal ist ein Wert Y = P. Durch diese Anordnung von jeweils zwei Sensorelementen können zwei phasenverschobene Messsignale erzeugt werden, wobei elektrische und mechanische Störungen, wie beispielsweise elektrische Einstrahlung oder mechanische Erschütterung, beide Sensorelemente gleichzeitig in gleichem Maße beeinflusst, so dass die Störungen herausgerechnet werden können.

Es gibt verschiedene Möglichkeiten, die Sensorelemente 15, 16, 17 und 18 zu verschalten. Beispielsweise kann jeweils ein Paar von Sensorelemente, als Halbbrücke verschaltet werden, z.B. können die Sensorelemente 15 und 16, sowie die Sensorelemente 17 und 18 miteinander als Halbbrücke verschaltet werden, oder es werden die Sensorelemente 15 und 17, sowie die Sensorelemente 16 und 18 miteinander als Halbbrücke verschaltet. Dabei bleibt eine Flexibilität der weiteren Verrechnung der Signale der Sensorpaare erhalten. In Verbindung mit einer Verschaltung der vier Sensorelemente 15, 16, 17 und 18 als Vollbrücke können Störsignale besonders effizient und mit geringem Aufwand gedämpft werden, jedoch ohne der Möglichkeit, Einzelsignale der Sensoren zu verarbeiten.

Durch entsprechende Maßnahmen in der Signalelektronik des Sensors, z. B. mittels eines Komparators oder durch Verrechnung mit dem Signal der ersten Sensoranordnung kann das verbleibende Störsignal weiter gedämpft werden.

## Patentansprüche

1. Drehgeberzahnvorrichtung (20) für einen Drehgeber (30) mit einer Vielzahl von Messzähnen (10) und mindestens einer Referenzmarke (7, 9, 111),
wobei die Vielzahl von Messzähnen (10) jeweils eine Länge B, eine Breite D und eine Höhe H aufweisen, und wobei die Vielzahl von Messzähnen (10) auf einem Basiselement (200) mit einem Mittenabstand P > D angeordnet sind, so dass die Längsachsen (Z) der Vielzahl von Messzähnen (10) parallel zueinander liegen,
**dadurch gekennzeichnet, dass**
die Referenzmarke (7, 9, 111) in mindestens einem Bereich mindestens eines Markierzahns (6) ausgebildet ist, indem
die Drehgeberzahnvorrichtung (20) in einer Länge X < B bis zu einer Tiefe T ≥ H über einen bestimmten Bereich ausgeschnitten ist, wobei ein Messzahn (10) in der Mitte des ausgeschnittenen Bereichs unberührt bleibt, wodurch Zahnrümpfe (111) und ein Messzahn (10) in deren Mitte die Referenzmarke bilden, und/oder
indem die Breite D eines Teils mindestens eines Markierzahns (6) in Längsrichtung in einer Länge X < B verbreitert oder verschmälert ist.

2. Drehgeberzahnvorrichtung (20) nach Anspruch 1, wobei die Drehgeberzahnvorrichtung ein ferromagnetisches Material enthält

3. Drehgeberzahnvorrichtung (20) nach Anspruch 1 oder 2, wobei die Drehgeberzahnvorrichtung ein Zahnrad oder eine Zahnstange ist.

4. Drehgeberzahnvorrichtung (20) nach Anspruch 1, 2 oder 3, wobei die Referenzmarke (9) in einer Messzahnlücke zwischen zwei benachbarten Messzähnen (6-1, 6-2) ausgebildet ist.

5. Drehgeberzahnvorrichtung (20) nach Anspruch 1 oder 2, worin ein Teil des mindestens einen Markierzahns (6) in Längsrichtung in einer Länge X < B entfernt ist und dadurch eine Lücke (7) bildet.

6. Drehgeberzahnvorrichtung (20) nach Anspruch 5, worin die Lücke (7) bis zur Tiefe T ≥ H ausgefräst ist.

7. Drehgeberzahnvorrichtung (20) nach Anspruch 6, worin die Breite L der Fräsung folgende Relation erfüllt: P < L < 1,5P.

8. Drehgeberzahnvorrichtung (20) nach Anspruch 1 oder 2, worin ein Bereich mindestens einer Messzahnlücke (9) zwischen zwei benachbarten Messzähnen (6-1, 6-2) in Längsrichtung in einer Länge X < B ausgefüllt ist.

9. Drehgeberzahnvorrichtung (20) nach einem der Ansprüche 5 - 8, worin bei einer vorgegebenen Messzahnlänge B die Länge X der Lücke (7) folgende Relation erfüllt: 0,3 ≤ X/B ≤ 0,5.

10. Drehgeberzahnvorrichtung (20) nach einem der Ansprüche 1 - 9, worin die Drehgeberzahnvorrichtung (20) ein Zahnrad ist und worin das Zahnrad in einer Breite X < B bis zu einer Tiefe T ≤ H tangential ausgeschnitten ist, wobei ein Messzahn (10) in der Mitte des tangential ausgeschnittenen Bereichs unberührt bleibt, wodurch Zahnrümpfe (111) und ein Messzahn (10) in deren Mitte die Referenzmarke bildet.

11. Drehgeber (30) mit einer Drehgeberzahnvorrichtung (20) nach einem der Ansprüche 1 - 10 und einer Sensorvorrichtung (11), die folgendes umfasst:
eine erste Sensoranordnung (13), die so ausgelegt ist, dass sie ein SIN/COS Spursignal in Reaktion auf eine Bewegung der Messzähne (10) der Drehgeberzahnvorrichtung (20) erzeugen kann,
eine zweite Sensoranordnung (14), die so ausgelegt ist, dass sie ein Referenzmarkensignal in Reaktion auf eine Bewegung der Referenzmarke (7, 9, 111) der Drehgeberzahnvorrichtung (20) erzeugen kann,
ein Bias-Magnetsystem (12) und
eine Steuer- und Auswerteelektronik.

12. Drehgeber (30) nach Anspruch 10, worin die zweite Sensoranordnung (14) zwei Sensorelemente (15, 17) umfasst, die als Halbbrücke verschaltet sind, oder
worin die zweite Sensoranordnung (14) vier Sensorelemente (15, 16, 17,18) umfasst, die als Vollbrücke verschaltet sind.

13. Drehgeber (30) nach Anspruch 11 oder 12, worin die Sensorvorrichtung (11) sich relativ zu der Drehgeberzahnvorrichtung (20) so positionieren lässt, dass zwei Sensorelemente (15, 16) auf einer Achse senkrecht zur Bewegungsrichtung der Messzähne in einem vorbestimmten Abstand zueinander angeordnet sind, wobei das eine Sensorelement (15) über dem Bereich der Drehgeberzahnvorrichtung (20) mit der Referenzmarke liegt und das andere Sensorelement (16) über dem Bereich der Drehgeberzahnvorrichtung (20) ohne der Referenzmarke liegt.

14. Drehgeber (30) nach Anspruch 11 oder 12, worin die Sensorvorrichtung (11) sich relativ zu der Drehgeberzahnvorrichtung (20) so positionieren lässt, dass jeweils zwei Sensorelemente (15, 17) auf einer Achse parallel zur Bewegungsrichtung der Messzähne in einem vorbestimmten Abstand Y zueinander von 0,5P < Y < 1,5P, vorzugsweise Y = P, angeordnet sind, wobei P der Abstand zwischen zwei aufeinanderfolgenden Messzähnen (10) der Drehgeberzahnvorrichtung (20) ist.

15. Drehgeber (30) nach einem der Ansprüche 10 - 14, worin die erste und die zweite Sensoranordnung (13, 14) jeweils mindestens ein magnetisches Sensorelement umfasst.
